# EUROPEAN PATENT APPLICATION

(11) **EP 4 632 940 A1**
(43) Date of publication of application: **15.10.2025**
(21) Application number: 23907563.3
(22) Date of filing: 13.12.2023
(51) Int. Cl.: H01M 50/54, H01M 50/586, H01M 50/59, H01M 50/533

(54) **SECONDARY BATTERY AND MANUFACTURING METHOD THEREFOR**

(30) Priority: 20.12.2022 KR 20220179053
(71) Applicant: LG Energy Solution, Ltd., Seoul 07335 (KR)
(72) Inventor: KIM, Mi Na, Daejeon 34122 (KR); HWANG, Soo Ji, Daejeon 34122 (KR); KIM, Jin Hyung, Daejeon 34122 (KR); YU, Hyung Kyun, Daejeon 34122 (KR)
(74) Representative: Plasseraud IP
(86) International application number: PCT/KR2023/020526
(87) International publication number: WO 2024/136277

(57) **Abstract**

A secondary battery according to an embodiment of the present invention includes: a first electrode assembly including a plurality of first electrode tabs bonded to each other; a second electrode assembly including a plurality of second electrode tabs bonded to each other and stacked with the first electrode assembly; an electrode lead connected to the first electrode tabs; and a conductive connection member configured to connect the second electrode tab to the electrode lead. The electrode lead may include: a tab bonding part bonded to the first electrode tabs; a bridge part bent or folded from the tab bonding part in one rotation direction; and a lead part bent or folded from the bridge part in the other rotation direction. One end of the conductive connection member may be bonded to the bridge part or the lead part.

## Description

### TECHNICAL FIELD

### CROSS-REFERENCE TO RELATED APPLICATION

The present application claims the benefit of the priority of Korean Patent Application No. 10-2022-0179053, filed on December 20, 2022, which is hereby incorporated by reference in its entirety.

### TECHNICAL FIELD

The present invention relates to a secondary battery including a plurality of electrode assemblies and a method of manufacturing the same.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using secondary batteries increase, the demands for secondary batteries as energy sources are rapidly increasing. Thus, many studies on batteries which are capable of meeting various demands have been conducted.

The secondary batteries may be classified into cylindrical secondary batteries, pouch-type secondary batteries, and prismatic-type secondary batteries depending on the shape of the battery case. Among them, such a pouch-type secondary battery may accommodate an electrode assembly in which a positive electrode, a negative electrode, a separator, etc. are stacked inside a pouch-type battery case. The pouch-type secondary battery may be effectively used in various designs.

However, recently, the pouch-type secondary battery has been designed to be longer and thicker to increase in energy density according to the trends toward higher capacity and higher output. That is, the electrode assembly included in the pouch-type secondary battery becomes longer and thicker, and as a result, packaging materials and components are exposed to increasingly harsh processing conditions and usage environments.

However, if the electrode assembly becomes too thick, since a length difference between electrode tabs increases, stable current supply may be difficult, and a risk of disconnection in the outermost electrode tab may increase due to an external impact or deformation of the electrode assembly.

### DISCLOSURE OF THE INVENTION

### TECHNICAL PROBLEM

An object of the present invention for solving the above problem is to provide a secondary battery in which a length deviation between electrode tabs is reduced to prevent a risk of disconnection in the outermost electrode tab from occurring, and a method for manufacturing the same.

Another object of the present invention for solving the above problem is to provide a secondary battery that has a simple structure and high energy density and a method for manufacturing the same.

### TECHNICAL SOLUTION

A secondary battery according to an embodiment of the present invention includes: a first electrode assembly including a plurality of first electrode tabs bonded to each other; a second electrode assembly including a plurality of second electrode tabs bonded to each other and stacked with the first electrode assembly; an electrode lead connected to the first electrode tabs; and a conductive connection member configured to connect the second electrode tab to the electrode lead. The electrode lead may include: a tab bonding part bonded to the first electrode tabs; a bridge part bent or folded from the tab bonding part in one rotation direction; and a lead part bent or folded from the bridge part in the other rotation direction. One end of the conductive connection member may be bonded to the bridge part or the lead part.

The secondary battery may further include an insulating member configured to surround a portion that is closer to one end of both ends of the electrode lead. One end of the conductive connection member may be bonded between the other end of the electrode lead and the insulating member.

The other end of the electrode lead may be bonded to the first electrode tabs, and the other end of the conductive connection member may be bonded to the second electrode tabs.

The secondary battery may further include a battery case configured to accommodate the first electrode assembly and the second electrode assembly. The insulating member may be configured to insulate the electrode lead from the battery case, and one end of the electrode lead may be disposed outside the battery case.

The electrode lead may be bent or folded at least twice in opposite directions.

The conductive connection member may include: a tab bonding part bonded to the second electrode tab; a bridge part bent or folded from the tab bonding part; and a lead bonding part extending, bent, or folded from the bridge part so as to be bonded to the electrode lead.

A thickness of the electrode lead and the conductive connection member may be thicker than that of each of the first electrode tab and the second electrode tab.

The conductive connection member may have a length less than that of the electrode lead.

A method for manufacturing a secondary battery according to the other embodiment of the present invention includes: stacking a first electrode assembly including a plurality of first electrode tabs bonded to each other and a second electrode assembly including second electrode tabs bonded to each other; preparing a lead assembly; and connecting the lead assembly to the first electrode assembly and the second electrode assembly. The preparing of the lead assembly may include: surrounding a portion closer to one end of both ends of the electrode lead through an insulating member; and connecting one end of the conductive connection member between the other end of the electrode lead and the insulating member. In the connecting of the lead assembly, the other end of the electrode lead may be connected to the first electrode tab, and the other end of the conductive connection member may be connected to the second electrode tab.

In the preparing of the lead assembly, a length of the conductive connection member may be less than that of the electrode lead.

The preparing of the lead assembly may further include bending or folding the electrode lead at least twice in opposite directions and bending or folding the conductive connection member at least once.

### ADVANTAGEOUS EFFECTS

According to the preferred embodiment of the present invention, since the plurality of electrode assemblies are stacked instead of the single thick electrode assembly, the length deviation between the plurality of electrode tabs bonded to each other of each electrode assembly may be reduced. As a result, the stable current supply may be possible, and the risk of disconnection in the outermost electrode tab due to the external impact or the deformation of the electrode assembly may be minimized.

In addition, since the lead assembly is manufactured by the welding between the electrode lead and the conductive connection member, the lead assembly may be easily constructed and manufactured.

In addition, the conductive connection member may be provided to be shorter than the electrode lead, the space occupied by the conductive connection member within the battery case may be reduced. As a result, the energy density of the secondary battery may be improved, and the manufacturing cost of the lead assembly, especially the conductive connection member, may be reduced.

In the manufacturing method according to the preferred embodiment of the present invention, the lead assembly may be prepared first, and then, the lead assembly may be connected to the plurality of electrode assemblies. Therefore, when compared to the method in which the electrode lead and the conductive connection member are connected first to the plurality of electrode assemblies, and then, the conductive connection member is connected to the electrode lead, there may be the advantage that the manufacturing tolerance for the lead assembly 30 is reduced, and the manufacturing is simplified.

In addition, since the process of manufacturing the lead assembly and the process of manufacturing and stacking the electrode assembly are separated from each other, there may be the advantage in that the management of each process are facilitated.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a perspective view of the secondary battery according to an embodiment of the present invention.
FIG. 2 is a perspective view of an electrode assembly and a lead assembly according to an embodiment of the present invention.
FIG. 3 is a partial cross-sectional view taken along line A-A' of FIG. 1.
FIG. 4 is a partial cross-sectional view of a secondary battery according to a comparative example.
FIG. 5 is a plan view illustrating a state in which an electrode lead and a conductive connection member are unfolded according to an embodiment of the present invention.
FIG. 6a to 6c are views illustrating modified examples of the lead assembly of FIG. 3.
FIG. 7 is a flowchart illustrating a method for manufacturing a secondary battery according to another embodiment of the present invention.
FIG. 8 is a flowchart illustrating a process of preparing a lead assembly of FIG. 7.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

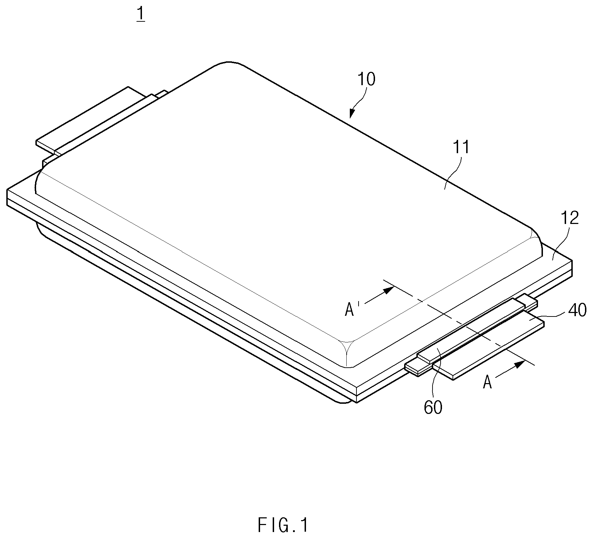

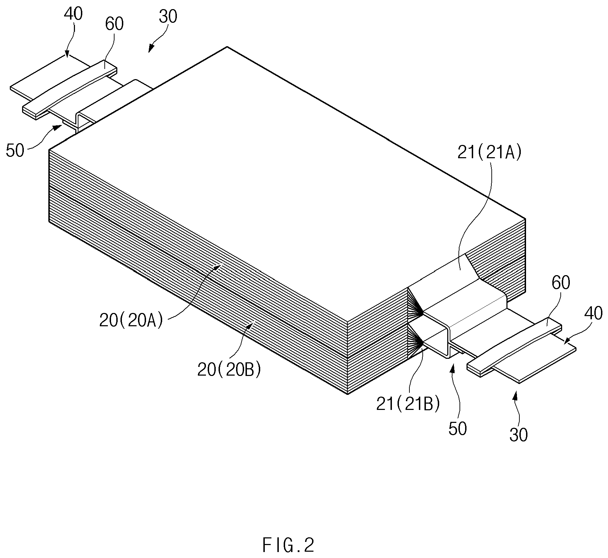

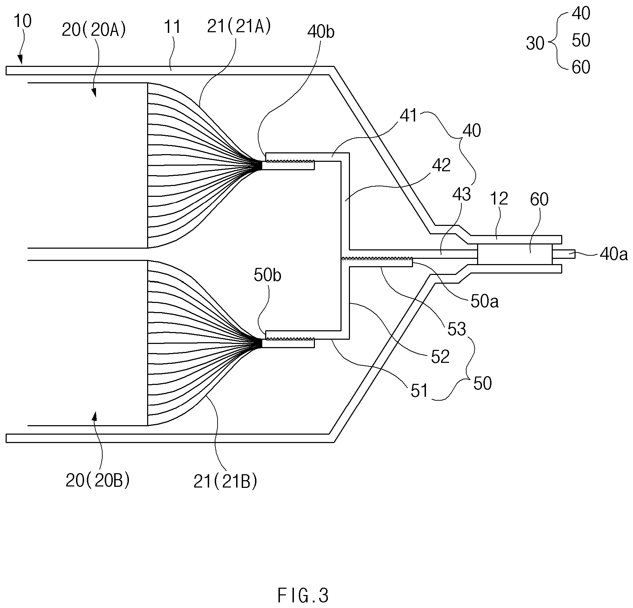

FIG. 1 is a perspective view of the secondary battery according to an embodiment of the present invention, FIG. 2 is a perspective view of an electrode assembly and a lead assembly according to an embodiment of the present invention, and FIG. 3 is a partial cross-sectional view taken along line A-A' of FIG. 1.

A secondary battery 1 according to an embodiment of the present invention may include a battery case 10, a plurality of electrode assemblies 20 accommodated in the battery case 10, and a lead assembly 30 connecting the plurality of electrode assemblies 20 to each other.

The battery case 10 may be a pouch-type battery case manufactured by molding a laminated film. In more detail, the battery case 10 may include an accommodation part 11, in which the plurality of electrode assemblies 20 are accommodated, and a sealing part 12 disposed around the accommodation part 11.

The battery case 10 may be manufactured by sealing a peripheral portion of the accommodation part 11 to form the sealing part 12 in a state in which a pair of cases, in which at least one of the cases is molded to be recessed, are disposed to face each other with the plurality of electrode assemblies 20 therebetween. The pair of cases may be cases of which sides are connected to each other through a folding part or are separated from each other. Since this is a well-known technique, a detailed description thereof will be omitted.

Each of the electrode assemblies 20 may be provided by interposing a separator between a positive electrode and a negative electrode, which are disposed alternately. That is, each of the electrode assemblies 20 may include a plurality of electrodes and a separator disposed between the plurality of electrodes to insulate the plurality of electrodes from each other. The electrode assembly 20 may be accommodated together with an electrolyte in the accommodation part 11 of the battery case 10.

The electrode assembly 20 may be provided in a stack type, jelly-roll type, stack and folding type, and the like, and the type of the electrode assembly 20 is not limited thereto.

Each of the electrode assemblies 20 may include a plurality of electrode tabs 21 bonded to each other. Each of the electrode tabs 21 may serve as a path through which electrons move between the inside and outside of the electrode assembly 20.

The plurality of electrode tabs 21 may be gathered to be welded so as to be bonded to each other, and this process may be called pre-welding. The pre-welding may be performed by ultrasonic welding, laser welding, or resistance welding.

In more detail, each electrode assembly 20 may include a plurality of positive electrode tabs bonded to each other and a plurality of negative electrode tabs bonded to each other. The positive electrode tab and the negative electrode tab may protrude in different directions from the electrode assembly 20, but are not limited thereto. For example, the positive electrode tab and the negative electrode tab may protrude in various directions, for example, protrude in parallel to each other from one side in the same direction.

The plurality of electrode assemblies 20 may be stacked on each other. A stacked thickness of the plurality of electrode assemblies 20 may be 30 mm or more. As a result, it is possible to increase in output of the secondary battery 1.

However, in order to prevent each electrode assembly 20 from becoming too thick, the number of electrodes included in each electrode assembly 20 may be 30 to 50. That is, each electrode assembly 20 may be provided by alternately stacking 30 electrodes to 50 electrodes with separators. Here, the thickness of each electrode, more specifically the current collector of each electrode, may be 5 *µ*m to 20 *µ*m. Since each electrode tab 21 is formed by notching a portion of the current collector, the thickness of the electrode tab 21 may be 5 *µ*m to 20 *µ*m.

The plurality of electrode assemblies 20 may include a first electrode assembly 20A and a second electrode assembly 20B stacked with the first electrode assembly 20A. If necessary, the plurality of electrode assemblies 20 may further include a third electrode assembly, a fourth electrode assembly, etc.

As described above, the electrode tabs 21 of each electrode assembly 20 may be bonded to each other. The electrode tab 21 of the first electrode assembly 20A may be referred to as a first electrode tab 21A, and the electrode tab 21 of the second electrode assembly 20B may be referred to as a second electrode tab 21B.

A pair of lead assemblies 30 may be provided. One lead assembly 30 may be a positive lead assembly that connects the positive electrode tabs of the plurality of electrode assemblies 20 to each other, and the other lead assembly 30 may be a negative lead assembly that connects the negative electrode tabs of the plurality of electrode assemblies 20 to each other.

The lead assembly 30 may connect the electrode tabs 21 of the plurality of electrode assemblies 20 to each other. The lead assembly 30 may connect the first electrode tab 21A to the second electrode tab 21B.

The lead assembly 30 may include an electrode lead 40 connected to the electrode tab 21 of one electrode assembly 20 of the plurality of electrode assemblies 20 and a conductive connection member 50 connecting the electrode tab 21 of the other electrode assembly 20 to the electrode lead 40.

That is, the lead assembly 30 may include an electrode lead 40 connected to the first electrode tab 21A and a conductive connection member 50 connecting the second electrode tab 21B to the electrode lead 40. The lead assembly 30 may further include an insulating member 60 surrounding a portion of the electrode lead 40.

The electrode lead 40 and the conductive connection member 50 may serve as a path through which current moves between the electrode assembly 20 and external components.

The electrode lead 40 and the conductive connection member 50 included in the positive electrode lead assembly may have the same material as the positive electrode current collector, for example, aluminum.

The electrode lead 40 and the conductive connection member 50 included in the negative electrode lead assembly may have the same material as the negative electrode current collector, for example, nickel (Ni) and/or copper (Cu). In particular, when the secondary battery 1 is used for an electric vehicle (EV) or an energy storage system (ESS), the electrode lead 40 and the conductive connection member 50 included in the negative electrode lead assembly may be made of copper that is plated with nickel.

In addition, the electrode lead 40 and the conductive connection member 50 may be surface treated to ensure corrosion resistance against an electrolyte and adhesion to the insulating member 60, which will be described later. For example, surfaces of the electrode lead 40 and the conductive connection member 50 may be treated with at least one of chromium coating, oxide coating (Al₂O₃) coating, chemical conversion coating, and organic coating.

Each of the electrode lead 40 and the conductive connection member 50 may be connected to the electrode tab 21 by being welded to the electrode tab 21. This process may be named main-welding. The main-welding may be performed by ultrasonic welding, laser welding, or resistance welding.

The electrode lead 40 may protrude to the outside through the sealing part 12 of the battery case 10. In more detail, one end 40a of the electrode lead 40 may be disposed outside the battery case 10, and the other end 40b of the electrode lead 40 may be bonded to the first electrode tab 21A.

The conductive connection member 50 may connect the second electrode tab 21B to the electrode lead 40 inside the battery case 10. The conductive connection member 50 may be connected to the electrode lead 40 by welding. The welding between the conductive connection member 50 and the electrode lead 40 may be performed by ultrasonic welding, laser welding, or resistance welding.

In more detail, one end 50a of the conductive connection member 50 may be bonded between the other end 40b of the electrode lead 40 and the insulating member 60, and the other end 50b of the conductive connection member 50 may be bonded to the second electrode tab 21B.

A thickness of each of the electrode lead 40 and the conductive connection member 50 may be thicker than the thickness of each electrode tab 21. In more detail, the thickness of each of the electrode lead 40 and the conductive connection member 50 may be 200 *µ*m or more, and the thickness of the electrode tab 21 may be 5 to 20 *µ*m as described above. That is, the thickness of each of the electrode lead 40 and the conductive connection member 50 may be 10 times or more than the thickness of the electrode tab 21.

As a result, the electrode lead 40 and the conductive connection member 50 may have high strength, and a risk of breakage due to deformation due to an external impact or swelling of the electrode assembly may be reduced.

For a smooth flow of current, the width of each of the electrode lead 40 and the conductive connection member 50 may be 30 mm or more.

The electrode lead 40 may be bent or folded at least twice in opposite directions. In addition, the conductive connection member 50 may be bent or folded at least once.

For this purpose, a length of each of the electrode lead 40 and the conductive connection member 50 may be 60 mm or more. If the length of each of the electrode lead 40 and the conductive connection member 50 is shorter than 60 mm, the bending or folding processing may be difficult.

As a result, even if each electrode assembly 20 is swelled or deformed, the electrode lead 40 and the conductive connection member 50 may be unfolded little by little without being disconnected. In addition, tension applied to the electrode tabs 21 of each electrode assembly 20 may be minimized to prevent disconnection from occurring in the electrode tab 21.

In more detail, the electrode lead 40 may include a tab bonding part 41 bonded to the first electrode tab 21A, a bridge part 42 bent or folded from the tab bonding part 41 in one rotation direction (for example, a clockwise direction in FIG. 3), and a lead part 43 bent or folded from the bridge part 42 in the other rotation direction (for example, a counterclockwise direction in FIG. 3). The lead part 43 may include one end 40a of the electrode lead 40, and the tab bonding part 41 may include the other end 40b of the electrode lead 40.

In addition, the conductive connection member 50 may include a tab bonding part 51 bonded to the second electrode tab 21B, a bridge part 52 bent or folded from the tab bonding part 51, and a lead bonding part 53 that extends or is bent or folded from the bridge part 52 so as to be bonded to the electrode lead 40. The lead bonding part 53 may include one end 50a of the conductive connection member 50, and the tab bonding part 51 may include the other end 50b of the conductive connection member 50.

Although not shown in the drawings, a portion at which the first electrode tab 21A and the electrode lead 40 are bonded to each other and/or a portion at which the second electrode tab 21B and the conductive connection member 50 are bonded to each other may be surrounded by a protective member (for example, a protective tape).

The lead bonding part 53 of the conductive connection member 50 may be bonded to the bridge part 42 or lead part 43 of the electrode lead 40. FIG. 3 illustrates a state in which the lead bonding part 53 is bonded to the lead part 43.

The tab bonding part 41 of the electrode lead 40 and the tab bonding part 51 of the conductive connection member 50 may be substantially parallel to each other.

The tab bonding part 41 of the electrode lead 40 and the tab bonding part 51 of the conductive connection member 50 may have the same or similar length. In addition, the bridge part 42 of the electrode lead 40 and the bridge part 52 of the conductive connection member 50 may have the same or similar length.

A direction in which the bridge part 52 of the conductive connection member 50 is bent or folded from the tab bonding part 51 may be a direction opposite to a direction in which the bridge part 42 of the electrode lead 40 is bent or folded from the tab bonding part 41. Thus, the tab bonding part 41 and bridge part 42 of the electrode lead 40 and the tab bonding part 51 and bridge part 52 of the conductive connection member 50 together have a substantially rotating 'U' shape, or a ' 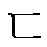 ' shape.

The insulating member 60 may insulate the battery case 10 and the electrode lead 40 from each other. The insulating member 60 may adhere to the electrode lead 40. In addition, the insulating member 60 may be sealed with an inner surface of the battery case 10, and more specifically, the sealing part 12. As a result, the battery case 10 may be reliably sealed, and the electrode lead 40 may protrude to the outside of the battery case 10 through the sealing part 12.

The insulating member 60 may surround a portion of the electrode lead 40, more specifically, the lead part 43. The insulating member 60 may surround a portion closer to one end 40a of both ends 40a and 40b of the electrode lead 40. For example, the insulating member 60 may be an insulating film.

The insulating member 60 may include at least one layer, preferably two or more layers of polypropylene (PP).

The insulating member 60 may be provided to be long in a width direction of the electrode lead 40, and the length of the insulating member 60 may be greater than that of the electrode lead 40. In more detail, the length of the insulating member 60 may be 35 mm or more. As a result, the insulating member 60 may reliably insulate the electrode lead 40 and the battery case 10 from each other.

A thickness of the insulating member 60 may be thicker than that of the electrode tab 21 and thinner than that of the electrode lead 40. In more detail, the thickness of the insulating member 60 may be 100 *µ*m or more.

A plurality of stacked electrode assemblies 20 may be electrically connected to each other through the lead assembly 30. In addition, since a length deviation between the plurality of electrode tabs 21 bonded to each other of each electrode assembly 20 is reduced, current may be stably supplied, and possibility of disconnection of the outermost electrode tab due to an external impact or deformation of the electrode assembly 20 may be minimized.

In addition, since the lead assembly 30 is manufactured by being welded between the electrode lead 40 to which the insulating member 60 is attached and the conductive connection member 50, there may be an advantage in which configurations and manufacturing of the lead assembly 30 are simple.

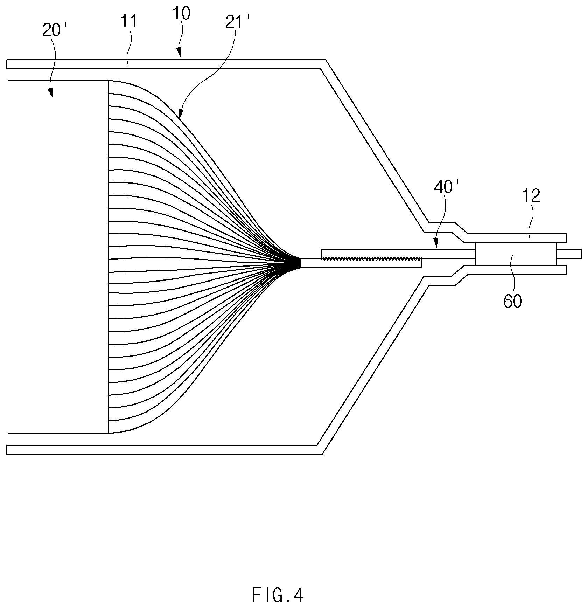

FIG. 4 is a partial cross-sectional view of a secondary battery according to a comparative example.

A secondary battery according to a comparative example may include a battery case 10 and a single electrode assembly 20' accommodated in the battery case 10. In this case, a thickness of the electrode assembly 20' may correspond to the stacked thickness of the plurality of electrode assemblies 20 according to an embodiment of the present invention.

The electrode assembly 20' may be provided with a plurality of electrode tabs 21' bonded to each other, and an electrode lead 40' may be welded to the electrode tabs 21'. The insulating member 60 may insulate the electrode lead 40' from the battery case 10, and the electrode lead 40' may pass through the insulating member 60 to protrude to the outside of the battery case 10.

Since the electrode assembly 20' according to the comparative example is provided to be very thick, in order for the plurality of electrode tabs 21' provided in the electrode assembly 20' to be bonded to each other, a length deviation between the plurality of electrode tabs 21' has to be large. In this case, there is a risk that supply of current through the plurality of electrode tabs 21' may become unstable.

In addition, since high tension is applied to the outermost electrode tab of the plurality of electrode tabs 21', a risk of disconnection in the outermost electrode tab may increase due to an external impact or deformation of the electrode assembly 20'.

The secondary battery 1 according to an embodiment of the present invention may resolve the concerns that may arise in the secondary battery according to the comparative example.

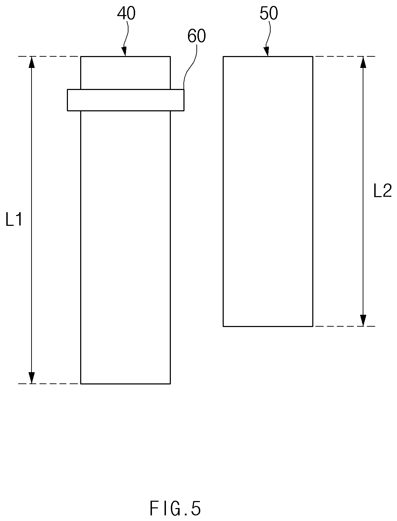

FIG. 5 is a plan view illustrating a state in which the electrode lead and the conductive connection member are unfolded according to an embodiment of the present invention.

A length L2 of the conductive connection member 50 may be less than a length L1 of the electrode lead 40. This means that the electrode lead 40 has to extend from the first electrode tab 21A to the outside of the battery case 10, but the conductive connection member 50 connects the second electrode tab 21B to the electrode lead 40 inside the battery case 10.

As a result, since a space occupied by the conductive connection member 50 within the battery case 10 is reduced, energy density of the secondary battery 1 may be improved. In addition, manufacturing costs of the lead assembly 30, especially the conductive connection member 50, may be reduced.

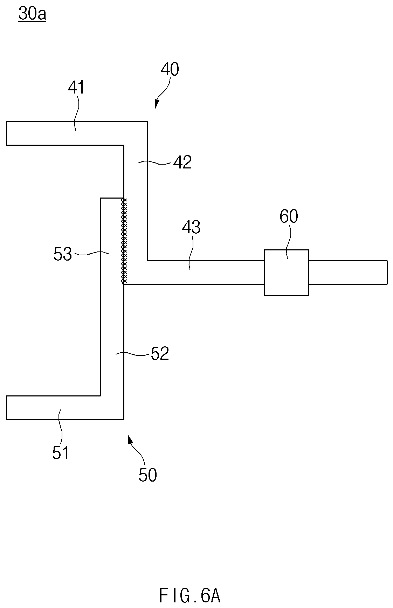

FIG. 6a to 6c are views illustrating modified examples of the lead assembly of FIG. 3.

Referring to FIG. 3, in the case of the lead assembly 30 according to an embodiment, the bridge part 42 of the electrode lead 40 may be bent or folded to form an angle of approximately 90 degrees with respect to the tab bonding part 41, and the lead part 43 may be bent or folded to form an angle of approximately 90 degrees with respect to the bridge part 42. The bridge part 42 and the lead part 43 may be bent or folded in opposite directions.

In addition, the bridge part 52 of the conductive connection member 50 may be bent or folded to form an angle of approximately 90 degrees with respect to the tab bonding part 51, and the lead bonding part 53 may be bent or folded to form an angle of approximately 90 degrees with respect to the bridge part 52. The bridge part 52 and the lead bonding part 53 may be bent or folded in opposite directions. In addition, the lead bonding part 53 may be welded to the lead part 43.

Referring to FIG. 6a, in the case of a lead assembly 30a according to a first modified example, when compared to the lead assembly 30 according to an embodiment, a lead bonding part 53 of a conductive connection member 50 may extend from a bridge part 52 without being bent or folded from the bridge part 52. The lead bonding part 53 may be welded to the bridge part 42 of the electrode lead 40.

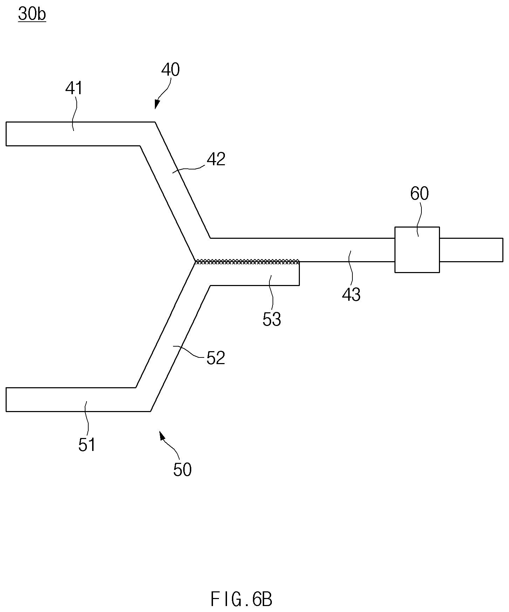

Referring to FIG. 6b, in the case of a lead assembly 30b according to a second modified example, a bridge part 42 of an electrode lead 40 may be bent or folded to form an obtuse angle with respect to a tab bonding part 41, and the lead part 43 may be bent or folded to form an obtuse angle with respect to the bridge part 42. The bridge part 42 and the lead part 43 may be bent or folded in opposite directions.

In addition, the bridge part 52 of the conductive connection member 50 may be bent or folded to form an obtuse angle with respect to the tab bonding part 51, and the lead bonding part 53 may be bent or folded to form an obtuse angle with respect to the bridge part 52. The bridge part 52 and the lead bonding part 53 may be bent or folded in opposite directions. In addition, the lead bonding part 53 may be welded to the lead part 43.

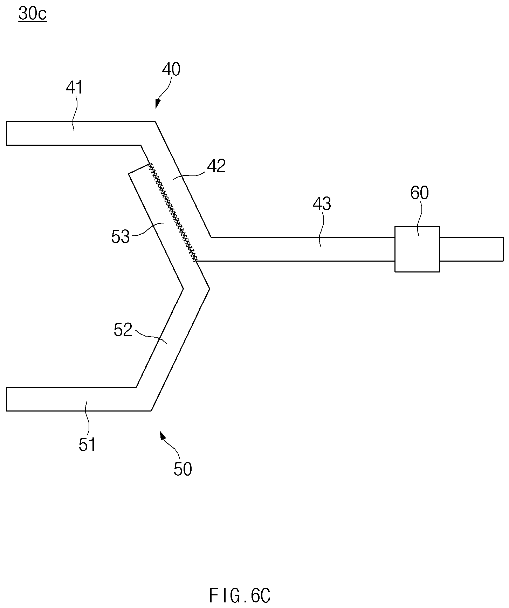

Referring to FIG. 6c, in the case of a lead assembly 30a according to a third modified example, when compared to the lead assembly 30b according to the second modified example, a bridge part 52 and a lead bonding part 53 of a conductive connection member 50 may be bent or folded in the same direction. The lead bonding part 53 may be welded to the bridge part 42 of the electrode lead 40.

As illustrated in an embodiment and modified examples of the present invention, the lead assembly 30 may be manufactured in various manners. Thus, an appropriate lead assembly 30 may be used depending on sizes or shapes of the battery case and electrode assembly.

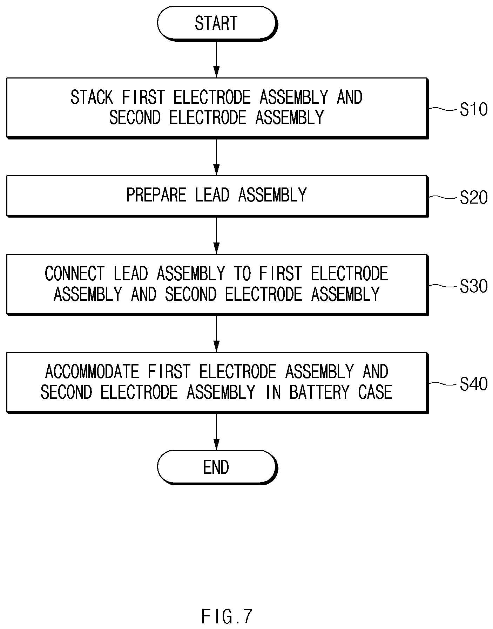

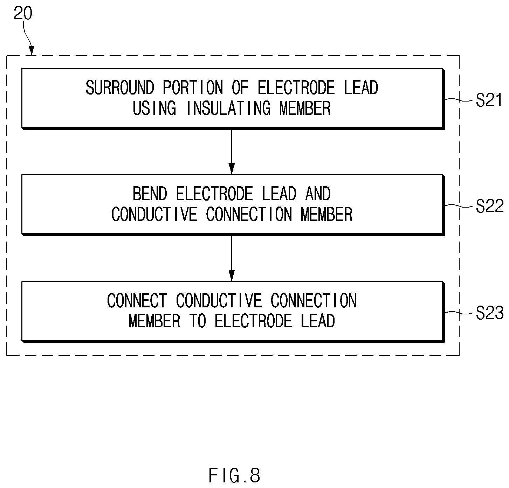

FIG. 7 is a flowchart illustrating a method for manufacturing a secondary battery according to another embodiment of the present invention, and FIG. 8 is a flowchart illustrating a process of preparing a lead assembly of FIG. 7.

Hereinafter, a method for manufacturing the previously described secondary battery will be described as another embodiment of the present invention.

A method for manufacturing a secondary battery (hereinafter, referred to as a 'manufacturing method') according to another embodiment of the present invention includes a process (S10) of stacking a plurality of electrode assemblies 20 and a process (S20) preparing a lead assembly 30, and a process (S30) of connecting the lead assembly 30 to the plurality of electrode assemblies 20. The manufacturing method may include a process (S40) of accommodating a plurality of electrode assemblies 10 in a battery case 10.

The process (S10) of stacking the plurality of electrode assemblies 20 and the process (S20) of preparing the lead assembly 30 may be performed sequentially, in reverse order, or simultaneously.

In the process (S10) of stacking the plurality of electrode assemblies 20, the first electrode assembly 20A and the second electrode assembly 20B may be stacked.

In the process (S20) of preparing the lead assembly 30, the lead assembly 30 may be formed using an electrode lead 40 and a conductive connection member 50, each of which has a predetermined length and width. The electrode lead 40 and the conductive connection member 50 may be separate members. A length L2 of the conductive connection member 50 may be shorter than a length L1 of the electrode lead 40.

The process (S20) of preparing the lead assembly 30 may include a process (S21) of surrounding a portion of the electrode lead 40 using an insulating member 60 and a process (S23) of connecting the conductive connection member 50 to the electrode lead 40. Th process of preparing the lead assembly 30 may further include a process (S22) of bending or folding the electrode lead 40 and the conductive connection member 50.

In the process (S21) of surrounding the portion of the electrode lead 40 using the insulating member 60, the insulating member 60 may surround a portion that is closer to one end 40a of both ends 40a and 40b of the electrode lead 40. The insulating member 60 may be thermally fused or attached to the electrode lead 40.

In the process (S22) of bending or folding the electrode lead 40 and the conductive connection member 50, the electrode lead 40 may be bent or folded at least twice in opposite directions. As a result, the electrode lead 40 may be divided into a tab bonding part 41, a bridge part 42, and a lead part 43. The bridge part 42 may be bent or folded to form an angle of 90 degrees or more with respect to the tab bonding part 41, and the lead part 43 may be bent or folded to form an angle of 90 degrees or more with respect to the bridge part 42.

In addition, in the process (S22) of bending or folding the electrode lead 40 and the conductive connection member 50, the conductive connection member 50 may be bent or folded at least once.

When the conductive connection member 50 is bent or folded two or more times, the conductive connection member 50 may be divided into a tab bonding part 51, a bridge part 52, and a lead bonding part 53. The bridge part 52 may be bent or folded to form an angle of 90 degrees or more with respect to the tab bonding part 51, and the lead boding part 53 may be bent or folded to form an angle of 90 degrees or more with respect to the bridge part 52.

When the conductive connection member 50 is bent or folded once, the conductive connection member 50 may be divided into the tab bonding part 51 and the remaining section (see FIG. 6a). The remaining section may be bent or folded to form an angle of 90 degrees or more with respect to the tab bonding part 51. The remaining section may be a section that will later be divided into the bridge part 52 and the lead bonding part 53.

In the process (S23) of connecting the conductive connection member 50 to the electrode lead 40, one end 50a of the conductive connection member 50 may be connected between the other end 40b of the electrode lead 40 and the insulating member 60. In more detail, one end 50a of the conductive connection member 50 may be connected to the bridge part 42 or the lead part 43 of the electrode lead 40. The conductive connection member 50 and the electrode lead 40 may be connected by welding. As a result, the lead assembly 30 may be formed.

In the process (S30) of connecting the lead assembly 30, the lead assembly 30 may be connected to the first electrode assembly 20A and the second electrode assembly 20B. In more detail, the other end 40b of the electrode lead 40 may be connected to the first electrode tab 21A, and the other end 50b of the conductive connection member 50 may be connected to the second electrode tab 21B. The electrode lead 40 and the first electrode tab 21A, and the conductive connection member 50 and the second electrode tab 21B may be connected to each other by welding.

In the process (S40) of accommodating the plurality of electrode assemblies 20 in the battery case 10, in a state in which a pair of cases constituting the battery case 10 may be separated or unfolded, the plurality of electrode assemblies 10 may be accommodated in the accommodation part 11 formed in at least one of the pair of cases. Thereafter, in a state in which the pair of cases are aligned to be in contact with each other, a peripheral portion of the accommodation part 11 may be sealed to form a sealing part 12, thereby sealing the battery case 10. Here, a portion of the sealing part 12 may be sealed with the insulating member 60 of the lead assembly 30, and the electrode lead 40 may protrude to the outside of the battery case 20 through the insulating member 60.

As described above, the manufacturing method according to another embodiment of the present invention is characterized in that the lead assembly 30 is prepared first, and then, the lead assembly 30 is connected to the plurality of electrode assemblies 20. As a result, when compared to the method in which the electrode lead 40 and the conductive connection member 50 are connected first to the plurality of electrode assemblies 20, and then, the conductive connection member 50 is connected to the electrode lead 40, there is an advantage that a manufacturing tolerance for the lead assembly 30 is reduced, and the manufacturing is simplified. In addition, since the process of manufacturing the lead assembly 30 and the process of manufacturing and stacking the electrode assembly 20 are separated from each other, there may be an advantage in that the management of each process are facilitated.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being comprised in the present invention.

### [Description of the Symbols]

| | | | |
|---|---|---|---|
| 1: | Secondary battery | 10: | Battery case |
| 11: | Accommodation part | 12: | Sealing part |
| 20: | Electrode assembly | 21: | Electrode tab |
| 30: | Lead assembly | 40: | Electrode lead |
| 41: | Tab bonding part | 42: | Bridge part |
| 43: | Lead part | 50: | Conductive connection member |
| 51: | Tab bonding part | 52: | Bridge part |
| 53: | Lead bonding part | 60: | Insulating member |

## Claims

1. A secondary battery comprising:
a first electrode assembly comprising a plurality of first electrode tabs bonded to each other;
a second electrode assembly comprising a plurality of second electrode tabs bonded to each other and stacked with the first electrode assembly;
an electrode lead connected to the first electrode tabs; and
a conductive connection member configured to connect the second electrode tab to the electrode lead,
wherein the electrode lead comprises:
a tab bonding part bonded to the first electrode tabs;
a bridge part bent or folded from the tab bonding part in one rotation direction; and
a lead part bent or folded from the bridge part in the other rotation direction,
wherein one end of the conductive connection member is bonded to the bridge part or the lead part.

2. The secondary battery of claim 1, further comprising an insulating member configured to surround a portion that is closer to one end of both ends of the electrode lead,
wherein one end of the conductive connection member is bonded between the other end of the electrode lead and the insulating member.

3. The secondary battery of claim 2, wherein the other end of the electrode lead is bonded to the first electrode tabs, and
the other end of the conductive connection member is bonded to the second electrode tabs.

4. The secondary battery of claim 2, further comprising a battery case configured to accommodate the first electrode assembly and the second electrode assembly,
wherein the insulating member is configured to insulate the electrode lead from the battery case, and
the one end of the electrode lead is disposed outside the battery case.

5. The secondary battery of claim 1, wherein the electrode lead is bent or folded at least twice in opposite directions.

6. The secondary battery of claim 1, wherein the conductive connection member comprises:
a tab bonding part bonded to the second electrode tab;
a bridge part bent or folded from the tab bonding part; and
a lead bonding part extending, bent, or folded from the bridge part so as to be bonded to the electrode lead.

7. The secondary battery of claim 1, wherein a thickness of the electrode lead and the conductive connection member is thicker than that of each of the first electrode tab and the second electrode tab.

8. The secondary battery of claim 1, wherein the conductive connection member has a length less than that of the electrode lead.

9. A method for manufacturing a secondary battery, the method comprising:
stacking a first electrode assembly comprising a plurality of first electrode tabs bonded to each other and a second electrode assembly comprising second electrode tabs bonded to each other;
preparing a lead assembly; and
connecting the lead assembly to the first electrode assembly and the second electrode assembly,
wherein the preparing of the lead assembly comprises:
surrounding a portion closer to one end of both ends of the electrode lead through an insulating member; and
connecting one end of the conductive connection member between the other end of the electrode lead and the insulating member,
wherein, in the connecting of the lead assembly, the other end of the electrode lead is connected to the first electrode tab, and the other end of the conductive connection member is connected to the second electrode tab.

10. The method of claim 9, wherein, in the preparing of the lead assembly, a length of the conductive connection member is less than that of the electrode lead.

11. The method of claim 9, wherein the preparing of the lead assembly further comprises bending or folding the electrode lead at least twice in opposite directions and bending or folding the conductive connection member at least once.
